(19)

Europäisches
Patentamt
European
Patent Office
Office européen
des brevets

(11) **EP 2 525 616 A1**

(12) **EUROPEAN PATENT APPLICATION**
published in accordance with Art. 153(4) EPC

(43) Date of publication:
**21.11.2012 Bulletin 2012/47**

(21) Application number: **10842826.9**

(22) Date of filing: **12.01.2010**

(51) Int Cl.:
***H04W 72/04*** (2009.01)

(86) International application number:
**PCT/CN2010/070141**

(87) International publication number:
**WO 2011/085542 (21.07.2011 Gazette 2011/29)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Alcatel Lucent
75007 Paris (FR)**

(72) Inventors:
• **LIU, Jin
Shanghai 201206 (CN)**

• **ZHU, Xudong
Shanghai 201206 (CN)**
• **YOU, Mingli
Shanghai 201206 (CN)**
• **SUN, Fanglei
Shanghai 201206 (CN)**

(74) Representative: **2SPL Patentanwälte
Postfach 15 17 23
80050 München (DE)**

(54) **METHOD AND DEVICE FOR REDUCING CONTROL SIGNALING OVERHEAD**

(57) The invention relates to a method and apparatus for reducing an overhead of control signaling. The method of reducing an overhead of control signaling comprises the steps of: generating one of a plurality of downlink control information formats which is used for scheduling a physical uplink shared channel, and transmitting the generated one of the plurality of downlink control information formats which is used for scheduling the physical uplink shared channel, wherein each of the plurality of downlink control information formats includes a minimum payload required for a specific scenario. With the invention, the signaling overhead is minimized.

```
        Start

S110 Generate one downlink control
       information format

S120 Transmit the generated
downlink control information format

         End
```

Fig.1

EP 2 525 616 A1

**Description**

**Field of the invention**

The present disclosure relates to the field of communications and particularly to a method and apparatus for reducing an overhead of control signaling.

**Background of the invention**

In the 3GPP LTE Rel-8 system, the User Equipment (UE) is defined to be configured with two transmit antennas but only one Radio Frequency (RF) chain. This configuration of the UE results in that transmit antenna selective transmission is the only feasible multi-antenna technique to be exploited for LTE uplink (UL) transmission. Therefore for resource grants of LTE UL transmission, it is enough to define one Downlink Control Information (DCI) format (i.e., the DCI Format 0) to convey transmission information for the Physical Uplink Shared Channel (PUSCH).

However, in the 3GPP LTE-Advanced (LTE-A) system, the enhanced UL transmission modes such as SU-MIMO (Single User-Multiple Input Multiple Output), non-contiguous Resource Block (RB) allocation and carrier aggregation are introduced to satisfy the improved UL performance requirements. To support these new features in the LTE-A, additional DCI formats, modification of DCI monitoring sets and blind decoding are expected to be required.

In the 3GPP LTE-A, the Single Antenna Port Mode and spatial multiplexing has been already specified in the TR36.814 for UL transmissions of UEs with multiple transmit antennas. There is no agreement on introducing transmit diversity for PUSCH. Further it is specified that UL spatial multiplexing of up to four layers can be supported and up to two transport blocks (TBs) can be transmitted from a scheduled UE in a sub-frame per UL component carrier. Each TB has its own Modulation and Coding Scheme (MCS) level. The 3-bit precoding codebook and a 6-bit precoding codebook are used respectively for UL spatial multiplexing with two transmit antennas and four transmit antennas.

In the LTE Rel-8, the DCI format 0 is used for scheduling of the PUSCH. The information in Table 1 below is transmitted for the DCI format 0.

**Table 1**

| Information Content | Number of bits |
|---|---|
| Flag for format 0/format 1A differentiation | 1 |
| Hopping flag | 1 |
| RB assignment and hopping resource allocation | $\left\lceil \log_2\left(N_{RB}^{UL}(N_{RB}^{UL}+1)/2\right) \right\rceil$ |
| Modulation and Coding Scheme (MCS) and redundancy version | 5 |
| New Data Indicator (NDI) | 1 |
| Transmission Power Control (TPC) command for scheduled PUSCH | 2 |
| Cyclic shift for Demodulation-Reference Signal (M-RS) | 3 |
| *Uplink sub-frame index (presentfor TDD mode)* | 2 |
| *Downlink (DL) assignment index (presentfor TDD mode)* | 2 |
| Channel Quality Indicator (CQI) request | 1 |

Here $N_{RB}^{UL}$ denotes the UL bandwidth configuration expressed in the number of RBs, and the format 1A indicates transmission information of the downlink channel (since the format 0 and the format 1A are of the same length, the flag for format 0/format 1A differentiation is required to enable the UE to distinguish between the format 0 and the format 1A). It is clear that the DCI format 0 can not support the precoding operation and two TBs transmission.

In the 3GPP contribution R1-094497, Panasonic Corp. proposed a general DCI format (denoted as DCI format 0A, for instance) to support two TBs and precoding information simultaneously. It can be deduced that the information in Table 2 below is transmitted for the DCI format 0A.

**Table 2**

| Information Content | Number of bits |
|---|---|
| Differentiation flag for distinguishing this format with other formats of the same length if these formats are of the same length | x |
| Hopping flag | 1 |
| Resource block assignment and hopping resource allocation | $\left\lceil \log_2\left(N_{RB}^{UL}(N_{RB}^{UL}+1)/2\right) \right\rceil$ |
| MCS and redundancy version for TB1 | 5 |
| MCS and redundancy version for TB2 | 5 |
| New Data Indicator (NDI) for TB1 | 1 |
| New Data Indicator (NDI) for TB2 | 1 |
| TB-to-codeword swap flag | 1 |
| Precoding information | 3 for UE with two antenna ports<br>6 for UE with four antenna ports |
| TPC command for scheduled PUSCH | 2 |
| Cyclic shift for DM-RS | y |
| *Uplink sub-frame index* (present for TDD mode) | 2 |
| *DL assignment index* (present for TDD mode) | 2 |
| CQI request | 1 |

In this example, we assume that no layer shifting and no HARQ spatial bundling are configured because they have not been finalized in the 3GPP LTE-A standard. If layer shifting and HARQ (including NDI) spatial bundling are configured, no additional NDI for the TB2 is necessary and one NDI is defined for both of the TBs. The applicants believe that those skilled in the art can appreciate the specific meanings of the information transmitted for the format 0A. Therefore those fields will not be described in detail here for the sake of conciseness. It shall be noted that if the newly defined format is of the same length as other formats, then the differentiation flag in the first field of the format indicates the different formats of the same length.

By defining this general DCI format 0A, only one additional DCI format is required to support the enhanced UL SU-MIMO with precoding and two TBs. This solution has an advantage of eliminating the need of specifying a large number of formats so as to avoid excessive complexity of the implementation and the testing for blind decoding at the UE. However with this solution, the signaling overhead is not minimized. Especially for the Single Antenna Port Mode and the one-TB transmission mode, the precoding information field and/or the MCS field for the TB2 may be redundant. In order to keep reliable reception of the control signaling, besides these information bits, additional redundant bits will be added due to low-rate channel coding. Therefore more redundant bits can be expected for more information bits. Moreover when there is a heavy service load, i.e., a large number of UEs are scheduled, the aggregated signaling overhead for all served UEs will be serious.

Therefore there is a need of a solution to minimizing the signaling overhead.

### Summary of the invention

According to a first aspect of the invention, there is proposed a method of reducing an overhead of control signaling. The method comprises the steps of: generating one of a plurality of downlink control information formats which is used for scheduling a physical uplink shared channel; and transmitting the generated one of the plurality of downlink control information formats which is used for scheduling the physical uplink shared channel, wherein each of the plurality of downlink control information formats includes a minimum payload required for a specific scenario.

According to a second aspect of the invention, there is proposed an apparatus for reducing an overhead of control signaling. The apparatus comprises: a generating device for generating one of a plurality of downlink control information formats which is used for scheduling a physical uplink shared channel; and a transmitting device for transmitting the generated one of the plurality of downlink control information formats which is used for scheduling the physical uplink shared channel, wherein each of the plurality of downlink control information formats includes a minimum payload required for a specific scenario.

According to a third aspect of the invention, there is proposed a method of reducing an overhead of control signaling. The method comprises the steps of: receiving one of a plurality of downlink control information formats which is used for scheduling a physical uplink shared channel; and decoding blindly the received one of the plurality of downlink control information formats which is used for scheduling the physical uplink shared channel, wherein each of the plurality of downlink control information formats includes a minimum payload required for a specific scenario.

According to a fourth aspect of the invention, there is proposed an apparatus of reducing an overhead of control signaling. The apparatus comprises: a receiving device for receiving one of a plurality of downlink control information formats which is used for scheduling a physical uplink shared channel; and a blind decoding device for decoding blindly the received one of the plurality of downlink control information formats which is used for scheduling the physical uplink shared channel, wherein each of the plurality of downlink control information formats includes a minimum payload required for a specific scenario.

With the invention, the signaling overhead is minimized.

**Brief description of drawings**

Other objects and effects of the invention will become more apparent and readily appreciated from the following description taken in conjunction with the drawings and more full understanding of the invention, and in the drawings:

Fig.1 illustrates a flow chart of a method of reducing an overhead of control signaling according to an embodiment of the invention;
Fig.2 illustrates a block diagram of an apparatus for reducing an overhead of control signaling according to an embodiment of the invention;
Fig.3 illustrates a flow chart of a method of reducing an overhead of control signaling according to an embodiment of the invention; and
Fig.4 illustrates a block diagram of an apparatus for reducing an overhead of control signaling according to an embodiment of the invention.

Throughout the drawings, identical reference numerals denote identical, similar or corresponding features or functions.

**Detailed description of embodiments**

The fundamental idea of the invention is to make use of one of a plurality of defined downlink control information formats to schedule a physical uplink shared channel, wherein each of the plurality of downlink control information formats includes a minimum payload required for a specific scenario, thereby minimizing the signaling overhead.

Therefore from the perspective of supporting the enhanced UL SU-MIMO transmission mode, some new DIC formats are proposed in the following description for scheduling the physical uplink shared channel. If additional fields are required to support carrier aggregation and non-contiguous resource allocation, then the proposed DCI formats can be extended by including a carrier indication field, a resource allocation header and/or a resource allocation type, etc. That is, it shall be appreciated that the invention will not be limited to the specific DCI formats defined below.

According to the latest specification TR36.814 v1.5.1 on the 3GPP LTE-A, the possible PUSCH transmission modes are summarized in Table 3 below.

**Table-3**

| Transmission Mode | Transmission Schemes of PUSCH |
|---|---|
| 1 | Single-antenna port |
| 2 | Closed-loop spatial multiplexing with single codeword (one transport block) |
| 3 | Closed-loop spatial multiplexing with two codewords (two transport blocks) |

The existing DCI format 0 defined in the LTE Rel-8 can be used for the single-antenna port transmission mode. To support these two new transmission modes 2 and 3 while minimizing the signaling overhead, we propose the following new DCI formats for scheduling of the PUSCH in addition to the existing DCI format 0.

DCI format 0B

The DCI format 0B is used for the scheduling of one PUSCH codeword with precoding information. The information transmitted for the DCI format 0B is summarized in Table 4 below.

**Table 4**

| Information Content | Number of bits |
|---|---|
| Differentiation flag for distinguishing this format with other formats of the same length if these formats are of the same length | x |
| Hopping flag | 1 |
| Resource block assignment and hopping resource allocation | $\left\lceil \log_2\left(N_{RB}^{UL}(N_{RB}^{UL}+1)/2\right)\right\rceil$ |
| MCS and redundancy version | 5 |
| New Data Indicator (NDI) | 1 |
| Precoding Matrix Indicator (PMI) information for precoding | 3 for UE with two antenna ports<br>6 for UE with four antenna ports |
| TPC command for scheduled PUSCH | 2 |
| Cyclic shift for DM-RS | y |
| *Uplink sub-frame index* (present for TDD mode) | 2 |
| *DL assignment index* (present for TDD mode) | 2 |
| CQI request | 1 |

Compared to the DCI format 0A proposed by Panasonic Corp., the additional MCS field and NDI field for the second TB and the TB-to-codeword swap flag are saved due to PUSCH scheduling of one codeword with pre-coding information.

DCI format 0C

The DCI format 0C is used for scheduling of two PUSCH codewords with precoding information. The information that can be transmitted for the DCI format 0C is summarized in Table 5 below.

**Table 5**

| Information Content | Number of bits |
|---|---|
| Differentiation flag for distinguishing this format with other formats of the same length if these formats are of the same length | x |
| Hopping flag | 1 |
| Resource block assignment and hopping resource allocation | $\left\lceil \log_2\left(N_{RB}^{UL}(N_{RB}^{UL}+1)/2\right)\right\rceil$ |
| MCS and redundancy version for TB1 | 5 |
| MCS and redundancy version for TB2 | 5 |
| New Data Indicator (NDI) for TB1 | 1 |
| New Data Indicator (NDI) for TB2 | 1 |
| TB-to-codeword swap flag | 1 |
| PMI information for precoding | 6 **for 4 antenna ports at UE** |
| TPC command for scheduled PUSCH | 2 |

(continued)

| Information Content | Number of bits |
|---|---|
| Cyclic shift for DM-RS | y |
| *Uplink sub-frame index (presentfor TDD mode)* | 2 |
| *DL assignment index (presentfor TDD)* | 2 |
| CQI request | 1 |

Since it is specified in the TR36.814 that the precoding matrix for full-rank transmission is an identity matrix. For two antenna ports at UE, the transmission with two codewords corresponds to transmission of up to two ranks. Therefore the PMI information is unnecessary for this case. The difference of DCI format 0C from the DCI format 0A proposed by Panasonic Corp. is that the DCI format 0C is only applicable in the case of four antenna ports at a UE. Therefore we propose a compact DCI format 0D for this case and other specific scenarios in order to minimize the payload in the format.

DCI format 0D

The DCI format 0D is used for compact scheduling of two PUSCH codewords without precoding information. The information that can be transmitted for the DCI format 0D is summarized in Table 6 below.

**Table 6**

| Information Content | Number of bits |
|---|---|
| Differentiation flag for distinguishing this format with other formats of the same length if these formats are of the same length | x |
| Hopping flag | 1 |
| Resource block assignment and hopping resource allocation | $\left\lceil \log_2\left(N_{RB}^{UL}(N_{RB}^{UL}+1)/2\right)\right\rceil$ |
| MCS and redundancy version for TB1 | 5 |
| MCS and redundancy version for TB2 | 5 |
| New Data Indicator (NDI) for TB1 | 1 |
| New Data Indicator (NDI) for TB2 | 1 |
| TB-to-codeword swap flag if necessary | 1 |
| **PMI confirmation for precoding (Table 7)** | **1** |
| TPC command for scheduled PUSCH | 2 |
| Cyclic shift for DM-RS | y |
| *Uplink sub-frame index (presentfor TDD mode)* | 2 |
| *DL assignment index (presentfor TDD)* | 2 |
| CQI request | 1 |

Here, the content of PMI confirmation is defined as in Table-7.

**Table 7**

| Bit field mapped to index | Message |
|---|---|
| 0 | - Identity matrix precoding for two antenna ports at UE with two codewords<br>- Identity matrix precoding for four antenna ports at UE with two codewords and four ranks |
| 1 | Precoding according to latest PMI indicated by last DCI format |

The PMI confirmation value of 1 can be indicated in two scenarios. One scenario relates to long-term precoding, where the PMI is not various per subframe. In the other scenario, the newly generated PMI is the same as the last PMI. Compared to the DCI format 0C, the 6-bit PMI information is saved although an additional precoding confirmation bit is required.

The DCI format 0C and the compact DCI format 0D are defined for transmission of two codewords under the assumption that no layer shifting and no HARQ/NDI spatial bundling are configured. If NDI spatial bundling is agreed, then the NDI field for the second TB could further be saved.

The majority of useful scenarios of UL multi-antenna transmission are covered by the newly designed DCI formats 0B, 0C and 0D. With the newly defined DCI formats, the control signaling overhead can be minimized.

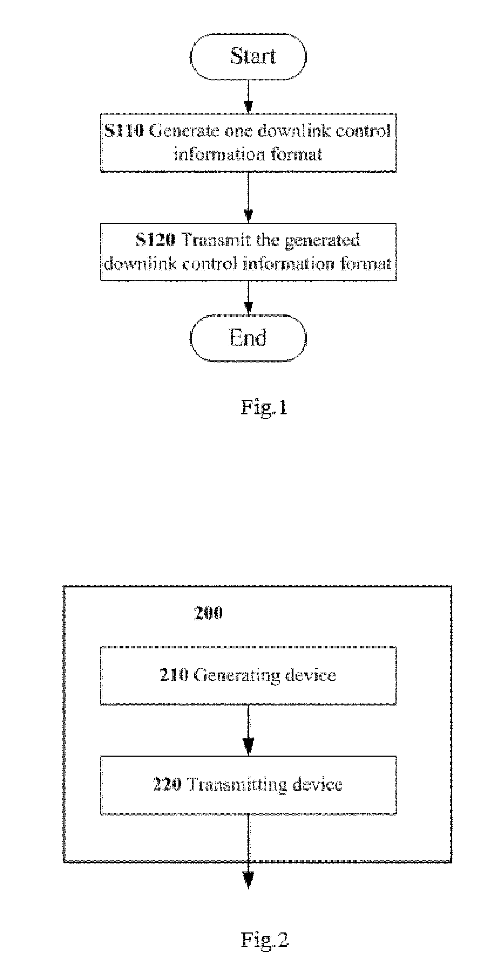

Fig.1 illustrates a flow chart of a method of reducing an overhead of control signaling according to an embodiment of the invention.

The method comprises the step S110 of generating one of a plurality of downlink control information formats which is used for scheduling a physical uplink shared channel, and the step S120 of transmitting the generated one of the plurality of downlink control information formats which is used for scheduling the physical uplink shared channel, wherein each of the plurality of downlink control information formats includes a minimum payload required for a specific scenario.

Wherein the plurality of downlink control information formats correspond to a plurality of downlink control information formats required for supporting a plurality of enhanced uplink transmission modes. More specifically the plurality of enhanced uplink transmission modes include various multi-input multi-output transmission modes defined in the specification. Namely, the plurality of downlink control information formats include the format 0, the format 0B, the format 0C and the format 0D as described above.

Fig.2 illustrates a block diagram of an apparatus for reducing an overhead of control signaling according to an embodiment of the invention.

The apparatus 200 includes a generating device 210 for generating one of a plurality of downlink control information formats which is used for scheduling a physical uplink shared channel, and a transmitting device 220 for transmitting the generated one of the plurality of downlink control information formats which is used for scheduling the physical uplink shared channel, wherein each of the plurality of downlink control information formats includes a minimum payload required for a specific scenario.

Wherein the plurality of downlink control information formats correspond to a plurality of downlink control information formats required for supporting a plurality of enhanced uplink transmission modes. More specifically the plurality of enhanced uplink transmission modes include various multi-input multi-output transmission modes defined in the specification. Namely, the plurality of downlink control information formats include the format 0, the format 0B, the format 0C and the format 0D as described above.

The apparatus 200 is arranged in, for example, an eNB.

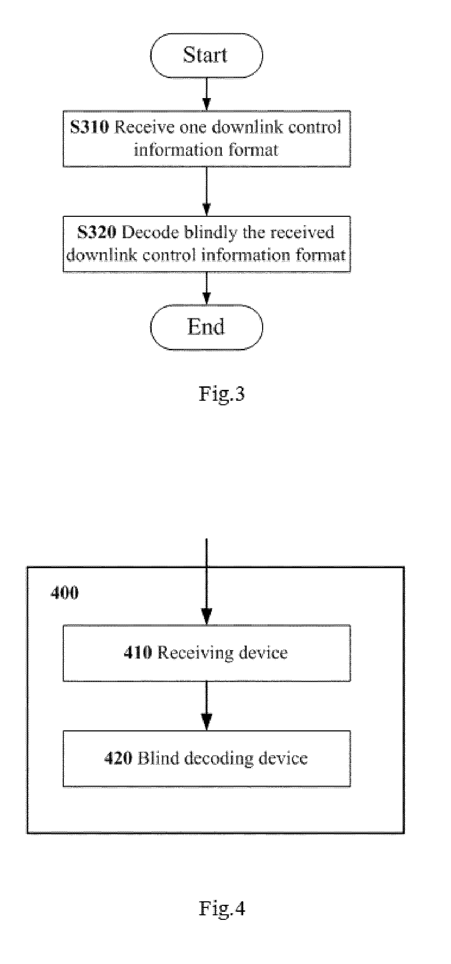

Fig.3 illustrates a flow chart of a method of reducing an overhead of control signaling according to an embodiment of the invention.

As illustrated in Fig.3, the method includes the step S310 of receiving one of a plurality of downlink control information formats which is used for scheduling a physical uplink shared channel, and the step S320 decoding blindly the received one of the plurality of downlink control information formats which is used for scheduling the physical uplink shared channel, wherein each of the plurality of downlink control information formats includes a minimum payload required for a specific scenario.

Wherein the plurality of downlink control information formats correspond to a plurality of downlink control information formats required for supporting a plurality of enhanced uplink transmission modes. More specifically the plurality of enhanced uplink transmission modes include various multi-input multi-output transmission modes defined in the specification. Namely, the plurality of downlink control information formats include the format 0, the format 0B, the format 0C and the format 0D as described above.

Fig.4 illustrates a block diagram of an apparatus for reducing an overhead of control signaling according to an embodiment of the invention.

As illustrated in Fig.4, the apparatus 400 includes a receiving device 410 for receiving one of a plurality of downlink control information formats which is used for scheduling a physical uplink shared channel, and a blind decoding device 420 for decoding blindly the received one of the plurality of downlink control information formats which is used for scheduling the physical uplink shared channel, wherein each of the plurality of downlink control information formats includes a minimum payload required for a specific scenario.

Wherein the plurality of downlink control information formats correspond to a plurality of downlink control information formats required for supporting a plurality of enhanced uplink transmission modes. More specifically the plurality of enhanced uplink transmission modes include various multi-input multi-output transmission modes defined in a specification. Namely, the plurality of downlink control information formats include the format 0, the format 0B, the format 0C and the format 0D as described above.

The apparatus 400 is arranged in, for example, a UE.

It shall be noted that some more specific technical details well known to those skilled in the art possibly necessary for an implementation of the invention have been omitted in the foregoing description so as to make the invention more apparent.

The specification of the invention is for the purpose of illustrating and describing but not exhausting or limiting the invention to the disclosure. Numerous modifications and variations will be apparent to those ordinarily skilled in the art.

Therefore the embodiments are selected and described for the purpose of better explaining the principle of the invention and the practical applications thereof, and those ordinarily skilled in the art can appreciate that all the modifications and variations shall fall into the scope of the invention as defined in the claims without departing from the essence of the invention.

**Claims**

1. A method of reducing an overhead of control signaling, the method comprising the steps of:

   generating one of a plurality of downlink control information formats which is used for scheduling a physical uplink shared channel; and
   transmitting the generated one of the plurality of downlink control information formats which is used for scheduling the physical uplink shared channel,
   wherein each of the plurality of downlink control information formats comprises a minimum payload required for a specific scenario.

2. The method according to claim 1, wherein the plurality of downlink control information formats correspond to a plurality of downlink control information formats required for supporting a plurality of enhanced uplink transmission modes.

3. The method according to claim 2, wherein the plurality of enhanced uplink transmission modes comprise various multi-input multi-output transmission modes defined in a specification.

4. An apparatus for reducing an overhead of control signaling, the apparatus comprising:

   a generating device for generating one of a plurality of downlink control information formats which is used for scheduling a physical uplink shared channel; and
   a transmitting device for transmitting the generated one of the plurality of downlink control information formats which is used for scheduling the physical uplink shared channel,
   wherein each of the plurality of downlink control information formats comprises a minimum payload required for a specific scenario.

5. The apparatus according to claim 4, wherein the plurality of downlink control information formats correspond to a plurality of downlink control information formats required for supporting a plurality of enhanced uplink transmission modes.

6. The apparatus according to claim 5, wherein the plurality of enhanced uplink transmission modes comprise various multi-input multi-output transmission modes defined in a specification.

7. A method of reducing an overhead of control signaling, the method comprising the steps of:

   receiving one of a plurality of downlink control information formats which is used for scheduling a physical uplink shared channel; and
   decoding blindly the received one of the plurality of downlink control information formats which is used for scheduling the physical uplink shared channel,
   wherein each of the plurality of downlink control information formats comprises a minimum payload required for a specific scenario.

8. The method according to claim 7, wherein the plurality of downlink control information formats correspond to a plurality of downlink control information formats required for supporting a plurality of enhanced uplink transmission modes.

9. The method according to claim 8, wherein the plurality of enhanced uplink transmission modes comprise various multi-input multi-output transmission modes defined in a specification.

10. An apparatus of reducing an overhead of control signaling, the apparatus comprising:

a receiving device for receiving one of a plurality of downlink control information formats which is used for scheduling a physical uplink shared channel; and
a blind decoding device for decoding blindly the received one of the plurality of downlink control information formats which is used for scheduling the physical uplink shared channel,
wherein each of the plurality of downlink control information formats comprises a minimum payload required for a specific scenario.

11. The apparatus according to claim 10, wherein the plurality of downlink control information formats correspond to a plurality of downlink control information formats required for supporting a plurality of enhanced uplink transmission modes.

12. The apparatus according to claim 11, wherein the plurality of enhanced uplink transmission modes comprise various multi-input multi-output transmission modes defined in a specification.

Start

**S110** Generate one downlink control information format

**S120** Transmit the generated downlink control information format

End

Fig.1

**200**

**210** Generating device

**220** Transmitting device

Fig.2

Fig.3

Fig.4

# INTERNATIONAL SEARCH REPORT

| | |
|---|---|
| International application No. | |
| | PCT/CN2010/070141 |

**A. CLASSIFICATION OF SUBJECT MATTER**

H04W72/04(2009.01)i

According to International Patent Classification (IPC) or to both national classification and IPC

**B. FIELDS SEARCHED**

Minimum documentation searched (classification system followed by classification symbols)

IPC: H04L，H04Q，H04W，H04B

Documentation searched other than minimum documentation to the extent that such documents are included in the fields searched

Electronic data base consulted during the international search (name of data base and, where practicable, search terms used)

CNPAT,CNKI,CNTXT,WPI,EPODOC: LTE，signaling, payload, overhead, minimize, downlink control information, DCI, format, schedule, PUSCH, physical uplink shared channel

**C. DOCUMENTS CONSIDERED TO BE RELEVANT**

| Category* | Citation of document, with indication, where appropriate, of the relevant passages | Relevant to claim No. |
|---|---|---|
| X | Motorola, DCI formats for uplink non-contiguous RB allocations, 3GPP TSG RAN1 #59, R1-094831, 13 Nov. 2009, section 1-section 6, table 4-table 9 | 1-12 |
| X | CN101562845A (HUAWEI TECHNOLOGIES CO LTD) 21 Oct. 2009 (21.10.2009) The description page 3 line 13-page 9 line 21, figures 1-4 | 1-12 |
| A | WO2008051038A1 (LG ELECTRONICS INC) 02 May 2008 (02.05.2008) The whole document | 1-12 |
| A | CN101505498A (ZTE CORP）12 Aug. 2009 (12.08.2009) The whole document | 1-12 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 15 Sept. 2010 (15.09.2010) | **14 Oct. 2010 (14.10.2010)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>WANG, Hua<br><br>Telephone No. (86-10)62412022 |

Form PCT/ISA /210 (second sheet) (July 2009)

<table>
<tr><td colspan="2" align="center">**INTERNATIONAL SEARCH REPORT**<br>Information on patent family members</td><td colspan="2">International application No.<br><br>PCT/CN2010/070141</td></tr>
<tr><td align="center">Patent Documents referred<br>in the Report</td><td align="center">Publication Date</td><td align="center">Patent Family</td><td align="center">Publication Date</td></tr>
<tr><td align="center">CN101562845A</td><td align="center">21.10.2009</td><td align="center">EP2192813A1</td><td align="center">02.06.2010</td></tr>
<tr><td></td><td></td><td align="center">US2010136993A1</td><td align="center">03.06.2010</td></tr>
<tr><td align="center">WO2008051038A1</td><td align="center">02.05.2008</td><td align="center">US2009067531A1</td><td align="center">12.03.2009</td></tr>
<tr><td></td><td></td><td align="center">TW200832959A</td><td align="center">01.08.2008</td></tr>
<tr><td></td><td></td><td align="center">KR20090045248A</td><td align="center">07.05.2009</td></tr>
<tr><td></td><td></td><td align="center">EP2076981A1</td><td align="center">08.07.2009</td></tr>
<tr><td></td><td></td><td align="center">CN101517929A</td><td align="center">26.08.2009</td></tr>
<tr><td align="center">CN101505498A</td><td align="center">12.08.2009</td><td align="center">None</td><td></td></tr>
</table>

Form PCT/ISA /210 (patent family annex) (July 2009)